(19) Europäisches Patentamt

European Patent Office

Office européen des brevets

(11) Veröffentlichungsnummer: **0 473 872 A2**

(12) **EUROPÄISCHE PATENTANMELDUNG**

(21) Anmeldenummer: **91105569.7**

(22) Anmeldetag: **09.04.91**

(51) Int. Cl.⁵: **H04L 25/00**

(30) Priorität: **25.08.90 DE 4026975**

(43) Veröffentlichungstag der Anmeldung:
**11.03.92 Patentblatt 92/11**

(84) Benannte Vertragsstaaten:
**DE FR IT**

(71) Anmelder: **VDO Adolf Schindling AG**
**Gräfstrasse 103**
**W-6000 Frankfurt/Main 90(DE)**

(72) Erfinder: **Petry, Roland**
**Nordlinger Strasse 11**
**W-6093 Flörsheim(DE)**
Erfinder: **Desaga, Günther**
**Höhestrasse 17A**
**W-6231 Schwalbach/Ts(DE)**

(74) Vertreter: **Könekamp, Herbert, Dipl.-Ing. et al**
**Sodener Strasse 9**
**W-6231 Schwalbach(DE)**

(54) Schaltungsanordnung zur Übertragung von seriellen Daten zwischen einem Sensor und einem Steuergerät.

(57) Bei einer Schaltungsanordnung zur Übertragung von Signalen zwischen einem Sensor und einem einen Mikrocomputer enthaltenden digitalen Steuergerät in einem Kraftfahrzeug, wobei das Steuergerät einen Diagnoseanschluß mit einer K-Leitung und einer L-Leitung aufweist, ist der Sensor über eine serielle Schnittstelle mit der K-Leitung und über ein Ein/Ausgangs-Tor mit der L-Leitung verbunden.

EP 0 473 872 A2

Die Erfindung betrifft eine Schaltungsanordnung zur Übertragung von Signalen zwischen einem Sensor und einem einen Mikrocomputer enthaltenden digitalen Steuergerät in einem Kraftfahrzeug, wobei das Steuergerät einen Diagnoseanschluß mit einer K-Leitung und einer L-Leitung aufweist.

Digitale Steuergeräte werden in Kraftfahrzeugen für verschiedene Zwecke eingesetzt - beispielsweise zur Regelung des Kraftstoff/Luft-Verhältnisses oder zur sogenannten Fahrwerksregelung, bei welcher die Dämpfungseigenschaften des Fahrwerks geregelt werden. An derartige Steuergeräte ist mindestens ein Sensor angeschlossen, dessen Ausgangssignal zum Steuergerät übertragen wird. Dabei ist im allgemeinen der Sensor vom Steuergerät örtlich abgesetzt.

Aufgabe der vorliegenden Erfindung ist es, eine Übertragung von Signalen von einem Sensor zu einem digitalen Steuergerät in zuverlässiger Weise zu ermöglichen, wobei die Zahl der Anschlüsse an dem Steuergerät möglichst klein zu halten ist.

Diese Aufgabe wird bei der erfindungsgemäßen Schaltungsanordnung dadurch gelöst, daß der Sensor über eine serielle Schnittstelle mit der K-Leitung und über ein Ein/Ausgangs-Tor mit der L-Leitung verbunden ist. Die Erfindung nutzt in vorteilhafter Weise den ohnehin bei den meisten Steuergeräten vorhandenen Diagnoseanschluß aus.

Dabei dient die K-Leitung zur Übertragung von seriellen Daten vom Sensor zum Steuergerät. Durch die Übertragung der digitalen Signale ist gegenüber einer analogen Übertragung eine Verbesserung der Störempfindlichkeit gegeben. Zur Initialisierung einer Diagnose wird ein entsprechendes Signal an die L-Leitung gelegt, worauf der entsprechend programmierte Mikrocomputer die Unterbrechung der Datenübertragung vom Sensor veranlaßt und ein Diagnoseprogramm aktiviert.

Eine vorteilhafte Weiterbildung der Erfindung besteht darin, daß die serielle Schnittstelle und das Ein/Ausgangs-Tor Teile eines weiteren, im Bereich des Sensors angeordneten Mikrocomputers sind. Durch eine entsprechende Programmierung des weiteren Mikrocomputers ist es in einfacher Weise möglich, bei einer Initialisierung der Diagnose über die L-Leitung den Datenaustausch zwischen den Mikrocomputern über die K-Leitung auch seitens des weiteren Mikrocomputers zu beenden.

Eine andere Weiterbildung der Erfindung sieht vor, daß die K-Leitung und die L-Leitung über Pegelwandler mit seriellen Schnittstellen und mit Ein/Ausgangs-Toren beider Mikrocomputer verbunden sind. Dadurch ist eine besonders störungssichere Übertragung der digitalen Signale zwischen dem Sensor und dem Steuergerät mit einem höheren Spannungspegel möglich.

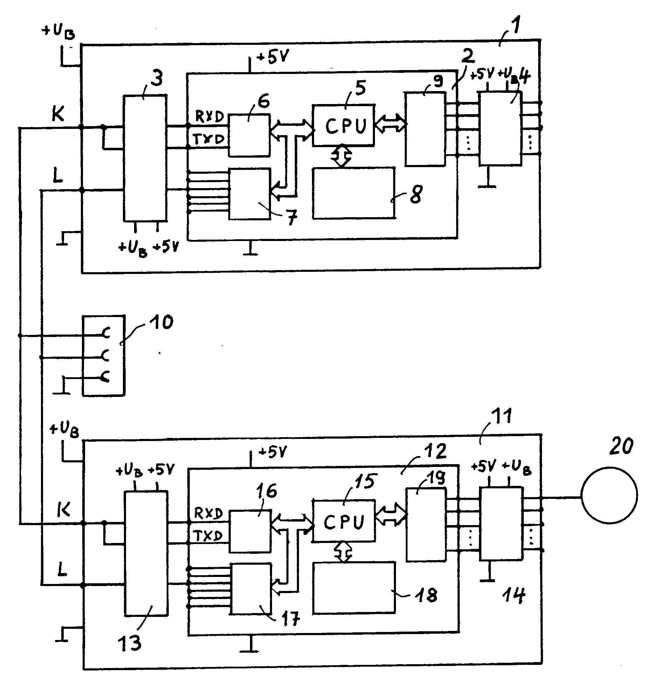

Die Erfindung läßt zahlreiche Ausführungsformen zu. Eine davon ist schematisch in der Zeichnung dargestellt und nachfolgend beschrieben.

Ein an sich bekanntes Steuergerät 1 enthält einen Mikrocomputer 2 und einen Pegelwandler 3 für digitale Ein- und Ausgangssignale und einen Pegelwandler 4 für analoge Eingangssignale. Der Mikrocomputer 2 umfaßt im wesentlichen eine zentrale Verarbeitungseinheit (CPU) 5, eine serielle Schnittstelle 6, Ein/Ausgangs-Tore (I/O ports) 7, Programm- und Datenspeicher 8, sowie einen Analog/Digital-Wandler 9 mit mehreren Eingängen.

Bei bekannten Steuergeräten ist ein Diagnoseanschluß 10 vorgesehen, der mit dem Pegelwandler 3 über eine sogenannte K-Leitung und über eine sogenannte L-Leitung verbunden ist. Einzelheiten über den Diagnoseanschluß sowie über die Durchführung der Diagnose sind in dem Norm-Entwurf DIN/ISO 9141 beschrieben. Die L-Leitung ist über den Pegelwandler 3 mit einem der Ein/Ausgangs-Tore 7 verbunden, während die K-Leitung ebenfalls über den Pegelwandler 3 an die beiden Leitungen RXD (received data) und TXD (transmit data) der seriellen Schnittstelle 6 angeschlossen ist.

Der Diagnoseanschluß 10 ist zum Anschluß eines Diagnosetesters (nicht dargestellt) vorgesehen, wobei zur Initialisierung der Diagnose über die L-Leitung dem Mikrocomputer 2 ein entsprechendes Signal zugeführt wird, worauf dieser ein zur Diagnose dienendes Programm startet. Zur Diagnose wichtige Informationen werden dem Diagnosetester über die K-Leitung zugeführt. Außerdem können über die K-Leitung dem Steuergerät 1 Daten zugeführt werden - beispielsweise geeignete Parameter für die Diagnose.

Bei dem dargestellten Ausführungsbeispiel ist der Sensor mit einer digitalen Schaltung 11 versehen, welche wie das Steuergerät einen Mikrocomputer 12 und Pegelwandler 13, 14 für digitale und analoge Signale enthält. Der Mikrocomputer 12 umfaßt im wesentlichen eine zentrale Verarbeitungseinheit 15, eine serielle Schnittstelle 16, Ein/Ausgangs-Tore 17, Programm- und Datenspeicher 18 und einen Analog/Digital-Wandler 19 mit mehreren Eingängen. Der eigentliche Sensor 20 ist über einen oder mehrere der Analogeingänge mit dem Pegelwandler 14 verbunden.

Die erfindungsgemäße Schaltungsanordnung ist für verschiedenartige Sensoren geeignet, beispielsweise kapazitive, resistive oder magnetische Sensoren, deren analoge Ausgangssignale, wie in der Zeichnung dargestellt, über den Pegelwandler 14 geleitet werden. Es ist jedoch auch die Verwendung von Impulssensoren, wie beispielsweise Drehzahl- und Winkelsensoren, möglich, deren impulsförmige Ausgangssignale über die Ein/Ausgangs-Tore 17 dem Mikrocomputer 12 zugeführt werden können.

Die Ausgangssignale des jeweiligen Sensors werden in digitaler Form über die K-Leitung dem Steuergerät 1 zugeführt, solange keine Diagnose vorgenommen wird. Wird jedoch über den Anschluß 10 die Verbindung mit einem Diagnosetester hergestellt und ein geeignetes Signal über die L-Leitung zugeführt, wird seitens des Mikrocomputers 12 die Datenübertragung über die K-Leitung abgebrochen. Der Mikrocomputer 2 startet ein Diagnoseprogramm, welches einen Datenaustausch zwischen dem Mikrocomputer 2 und dem Diagnosetester beinhaltet. Ist die Diagnose beendet, so kann die Datenübertragung vom Sensor bzw. von der digitalen Schaltung 11 zum Steuergerät 1 über die K-Leitung wiederaufgenommen werden.

In der Figur ist ferner schematisch die Stromversorgung der einzelnen Baugruppen dargestellt. In an sich bekannter Weise werden die Mikrocomputer 2, 12 mit einer Spannung von $+5$ V betrieben, während dem Steuergerät 1 und der Schaltung 11 die Batteriespannung $+U_B$ von beispielsweise 12 V zugeführt wird. Die Pegelwandler 3, 4, 13, 14 werden entsprechend ihrer Aufgabe mit beiden Betriebsspannungen versorgt.

**Patentansprüche**

1. Schaltungsanordnung zur Übertragung von Signalen zwischen einem Sensor und einem einen Mikrocomputer enthaltenden digitalen Steuergerät in einem Kraftfahrzeug, wobei das Steuergerät einen Diagnoseanschluß mit einer K-Leitung und einer L-Leitung aufweist, dadurch gekennzeichnet, daß der Sensor (20) über eine serielle Schnittstelle (16) mit der K-Leitung und über ein Ein/Ausgangs-Tor (17) mit der L-Leitung verbunden ist.

2. Schaltungsanordnung nach Anspruch 1, dadurch gekennzeichnet, daß die serielle Schnittstelle (16) und das Ein/Ausgangs-Tor Teile eines weiteren, im Bereich des Sensors angeordneten Mikrocomputers (12) sind.

3. Schaltungsanordnung nach Anspruch 2, dadurch gekennzeichnet, daß die K-Leitung und die L-Leitung über Pegelwandler (3; 13) mit seriellen Schnittstellen (6; 16) und mit Ein/Ausgangs-Toren (7; 17) beider Mikrocomputer (2, 12) verbunden sind.

+U_B

+5V

1

2

+5V +U_B

3

K

RXD

TXD

6

5

CPU

9

4

L

7

8

+U_B +5V

10

11

+U_B

12

+5V

+U_B +5V

15

19

+5V +U_B

13

K

RXD

TXD

16

CPU

20

L

17

18

14